(19) Europäisches Patentamt
European Patent Office
Office européen des brevets

(11) EP 4 575 998 A1

(12) EUROPEAN PATENT APPLICATION

(43) Date of publication:
25.06.2025 Bulletin 2025/26

(51) International Patent Classification (IPC):
*G06T 11/00* (2006.01)

(21) Application number: 23217993.7

(22) Date of filing: 19.12.2023

(52) Cooperative Patent Classification (CPC):
G06T 11/00

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(71) Applicant: Microsoft Technology Licensing, LLC Redmond, WA 98052-6399 (US)

(72) Inventors:
• ILSE, Maximilian
  98052-6399 Redmond (US)
• OKTAY, Ozan
  98052-6399 Redmond (US)
• OEZ, Mehmet Mert
  98052-6399 Redmond (US)
• Fernando, PEREZ GARCIA
  98052-6399 Redmond (US)
• SHARMA, Harshita
  98052-6399 Redmond (US)
• BRISTOW, Melissa
  98052-6399 Redmond (US)
• ALVAREZ VALLE, Javier
  98052-6399 Redmond (US)

(74) Representative: Page White Farrer
Bedford House
21a John Street
London WC1N 2BF (GB)

(54) **BRIDGING IMAGING MODALITIES**

(57) A computer implemented method comprising: obtaining a simulated input image simulating a second imaging modality based on a source image in a first imaging modality; inputting the simulated input image into a first machine learning model trained based on simulated training images in the second imaging modality, thereby generating a latent representation of the simulated input image; and causing the latent representation to be input into a second machine learning model trained based on empirical training images in the second image modality, thereby resulting in the second machine learning model generating a synthesized output image in the second modality.

Figure 2

EP 4 575 998 A1

**Description**

Background

A condition of a human or animal subject (e.g. patient) is often estimated at least in part based on one or more bodily scans, i.e. images of the subject's body produced using imaging modalities such as 2D x-ray, computed tomography (CT), positron emission tomography (PET), magnetic resonance imaging (MRI), ultrasound or microscopy. For example such scans could be used to diagnose an illness of the subject, such as cancer.

Machine learning is a form of artificial intelligence (AI) which revolves around the training of a statistical model known as a machine-learning (ML) model. A ML model comprises a plurality of parameters which relate the output of the model to its input. The inputs and outputs of the model are typically vectors. The parameters of the model can be tuned based on training data (using either a supervised, reinforcement or unsupervised approach) such that over multiple training data points the model will gradually learn to produce a desired output for a given input. Examples of types of ML model include a neural network, a clustering model, and a decision forest.

Neural networks are perhaps the most common form of ML model. A neural network comprises an interconnected network or mesh of nodes, wherein one or more input nodes receive the input of the model, one or more output nodes provide the output of the model, and in the interior of the network multiple intermediate nodes receive their respective inputs from the input nodes or other intermediate nodes and supply their respective output onward as the input to other interior nodes or the output nodes. The nodes are often arranged in layers in an approach known as deep learning. Whatever form the network takes, the output of each node is a respective function of its inputs, wherein the respective function at each node is parameterized by at least one respective parameter known as a weight (not necessarily a multiplicative weight, though that is certainly one possibility). E.g. the output of a node n in layer m could be equal to $\theta_{n,m}$ times a sum of its inputs from multiple nodes in layer m-1, where $\theta_{n,m}$ is the weight of node [n, m]. For a given set of training data, there will exist some combination of values for the weights of all the nodes in the network which will cause the network to approximate the desired output on average, and this combination of values of the weights is found through the training process.

It is known to apply machine learning to images of human subjects in the field of medicine. For example a machine learning model may be trained to recognize a certain condition or conditions (e.g. presence of a tumour) from an image of a subject. Or a ML model may be used to segment an image, i.e. to delineate one or more features such as a tumour or organ from the rest of the image, such as for guiding radiotherapy treatment. As another example, a machine learning model may be used to review textual reports on images written by a human practitioner. In this case the model may be trained based on multi-modal data comprising images and accompanying text data, such as prior medical reports describing the images. After a certain amount of training, the model can then be used to review new human-authored reports on new images. I.e. a human practitioner reviews the image or images of the subject (e.g. CT scan, etc.) and writes a report based on their review. The report and the image(s) are then input into the trained model in order to generate suggestions for updates to the report, which the human practitioner can then choose to accept or reject.

As another technology used in the field of medicine, it is also possible to use analytical (non-ML) techniques to simulate an image in a second imaging modality from an image captured in a first, different imaging modality. An example is a digitally reconstructed radiograph (DRR), which is a simulation of 2D x-ray image created from a source CT scan (a 3D x-ray image). The DRR rendering process takes the 3D data of the first modality (CT) and simulates certain physical aspects of the planar 2D image capture method of the second modality (2D ex-ray photography), thus generating a simulated image showing image content that was captured using the first imaging modality as if captured using the second imaging modality.

One possible use of DRRs is to enable CT scan data to contribute additional training data for a machine learning model that is being trained to make predictions based on 2D x-rays. In other words, it may be desirable to train a model to be able to make diagnoses or predict a treatment based on a 2D x-ray of a subject, but the number of 2D x-ray images of past subjects available as training data may be limited. The availability of 3D CT scans has the potential to provide additional training data, but first these will need to be used to generate simulated 2D x-ray images (DRRs) which can be used to train the model.

Another use for DRRs is to help propagate segmentation annotations collected on CT images to X-Rays. For example this may be used to train a segmentation model with DRRs and projected segmentation maps obtained from anatomical 3D CT images.

Summary

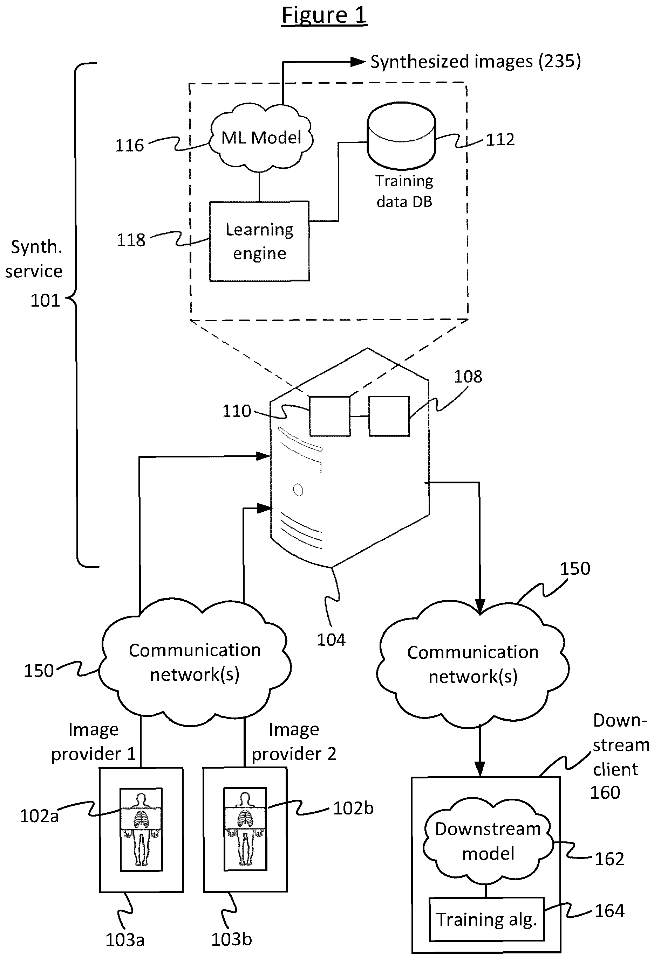

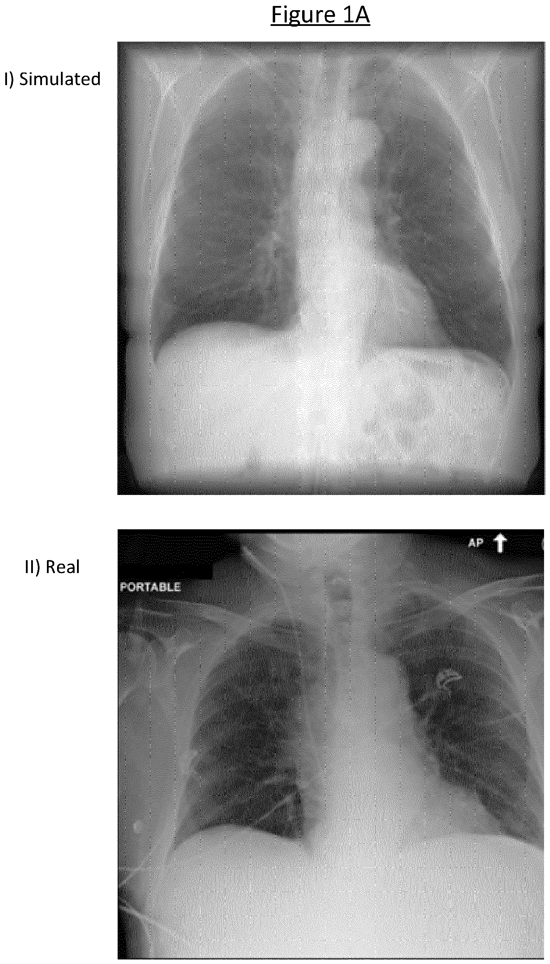

However, there is an issue with training a model based on simulated images, in that the simulation is not always as realistic as it might be. Particularly, the simulation can fail to capture one or more subtleties associated with the source imaging modality. For example, the posture which a subject (e.g. human patient) adopts in a CT scanner is typically different than when having a 2D x-ray photograph taken. E.g. the former is typically taken while the patient lies flat in a CT scanner while the latter may sometimes be taken while the patient is sitting up, or lying in a different position (e.g. on their side) on a different type of scanner bed. Small differences in patient posture can lead to slight differences between typical real-life x-rays and corresponding DRRs, such as body parts being slightly more stretched or compressed, or twisted very slightly in different ways. E.g. see Figure 1A. A DRR process or the like will be unable to simulate this kind of effect as it is not an inherent geometric feature of the image capture modality per se. Other such examples may include that the resolution of x-ray photographs and CT scans may be different resolutions, and/or that the texture of the images captured by different types of image capture media may be different. There may be many small hidden subtleties such as these, not all of which are necessarily even known.

Such considerations may also apply to other pairs of imaging modalities, both in medical applications and in other applications. For example it may be desirable to simulate CT scans from MRI scans, in order to provide more training data for ML models being trained to predict treatments or diagnoses from CT scans. Or it may be desired to simulate images to appear as if captured in a modality of a sensor (e.g. camera) used by a self-driving car or other robot, for use in training the car or robot. Generally in any such applications, it would be desirable to compensate for any one or more subtle differences between the source image modality and the simulated version of that modality which are not fully captured by the analytical algorithm of the simulation. Such differences could relate to the circumstances or manner in which images in the two modality are typically produced, or the inherent nature of the two different modalities. For example the difference(s) could be due a tendency for a different behaviour of a target (e.g. human or animal subject) when captured in the two different modalities (e.g. patient posture), and/or the environment in which images are typically captured when using the two modalities, or some physical aspect of the image capture technology itself that is not translated by the simulation.

By way of example, see Figure 1A which shows a comparison of a simulated DRR and a real chest x-ray. The upper image I) is the simulated DRR, and the lower image II) is the real chest x-ray. It would be desirable to synthesize more realistic images in the simulated modality.

According to one aspect disclosed herein, there is provided a computer implemented method comprising: obtaining a simulated input image simulating a second imaging modality based on a source image in a first imaging modality; and inputting the simulated input image into a first machine learning model trained based on simulated training images in the second imaging modality, thereby generating a latent representation of the simulated input image. The method further comprises: causing the latent representation to be input into a second machine learning model trained based on empirical training images in the second image modality, thereby resulting in the second machine learning model generating a synthesized output image in the second modality.

The first model converts each simulated image into a respective latent representation, i.e. encoding the information in the image. The second model converts each latent representation into a respective simulated output image, i.e. representing the information from the respective latent representation in a simulated form as if captured in the second imaging modality. Because the second model is trained based on empirical images captured in the second imaging modality (i.e. actual real-life images physically captured using second modality, as opposed to simulated versions), then the second model can synthesize any real-life effects of the second imaging modality that were observed in the empirical training images but not necessarily modelled by the theoretical transformation applied to the source image by the simulator. It is not even necessary for the party practicing the method to know what those effects are: because they will have been present in the training images used to train the second model, then they will be captured by the model.

In embodiments, the output images are used to train a downstream model to make a prediction, the prediction being based on a further image in the second imaging modality. For example the downstream application may comprise a medical application, in which case the prediction comprises at least one of: diagnosing a medical condition of a subject shown in the further image, or segmenting an anatomical feature of the subject or condition shown in the further image, or predicting a medical treatment to apply to the subject.

As another example the downstream application may comprise an autonomous control application for controlling a device such as a self-driving vehicle or other robot. In this case the prediction may comprise, for instance: detecting presence of an obstacle for the device (e.g. vehicle) to avoid, or route indicators such as road markings to direct the vehicle toward or along, or a target object for the device (e.g. robot) to interact with; and/or determining an action for the device to perform such as an evasive action to avoid the object, a directing action to direct the device based on the route indicators, or an interaction with the target object, respectively.

Another issue with converting between imaging modalities for machine learning purposes is that different imaging modalities may typically experience different sampling populations. In other words one imaging modality may more typically be used to sample from a population in which one feature is more prevalent, on average, whereas a the other imaging modality may more typically be used to sample from a population in which that feature is less prevalent and/or another feature is more prevalent on average. For instance, 2D x-rays are more often used in A&E (accident and emergency) departments of hospitals, whereas CT scans are more often used in screening or disease staging such as cancer staging. Thus, on average, a typical sample population of x-ray images will tend to contain more bone fractures and other physical traumas, whereas CT scans will tend to contain more tumours and other chronic diseases. Overall each modality may sometimes be used in both scenarios, and both types of condition may be present in both populations, but on average one would expect to see the conditions with different prevalence (in terms of severity and/or frequency) in the population of one imaging modality compared to that of the other.

Therefore in embodiments, the method may further comprise causing an editing prompt to be input into the second machine learning model, the editing prompt resulting in the second machine learning model, when generating the synthesized output image, to add or remove an effect of a population difference between the first imaging modality and the second imaging modality.

According to another aspect disclosed herein, there may be provided computer system comprising: processing apparatus comprising one or more processors; and memory comprising one or more memory devices, wherein the memory stores code arranged to run on the processing apparatus; wherein the code is configured so as when run on the processing apparatus to perform a method comprising: obtaining a latent representation encoding a simulated input image simulating a second imaging modality simulated based on a source image in a first imaging modality; inputting the latent information into a machine learning model trained based on empirical training images in the second image modality, and further inputting an editing prompt into the second machine learning model; and operating the second machine learning model to generate a synthesized output image in the second modality based on the latent representation and the input editing prompt, wherein the editing prompt causes the second machine learning model, when generating the synthesized output image, to add or remove an effect of a population difference between the first imaging modality and the second imaging modality.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

Brief Description of the Drawings

To assist understanding of the present disclosure and to show how embodiments may be put into effect, reference is made by way of example to the accompanying drawings in which:

Figure 1 is a schematic block diagram of a computer system in accordance with embodiments disclosed herein,

Figure 1A shows a comparison of a simulated DRR and a real chest x-ray,

Figure 2 is a schematic illustration of a machine learning model in accordance with embodiments disclosed herein,

Figure 3 is a flow chart of a method of generating synthesized images in accordance with embodiments disclosed herein,

Figure 4 gives a schematic illustration of generation multiple simulated images of second modality from an image of a first modality in accordance with embodiments disclosed herein,

Figure 5 shows some examples of image segmentation maps, and

Figure 6 is a schematic block diagram of a system for federated learning in accordance with embodiments disclosed herein.

Detailed Description of Embodiments

The development and deployment of AI systems for healthcare face several challenges, especially in the domain of medical image analysis. For example, one challenge is the scarcity of dense pixel-level annotations on medical images, which are required to train AI models for tasks such as segmentation, detection, and classification. Collecting such annotations for a large and diverse set of imaging datasets is often very costly, as it requires expert knowledge and time. Furthermore, in certain cases, it is challenging to annotate images due to the inherent physical limitations of certain imaging modalities. For instance, a 2D planar chest radiograph does not display certain conditions present in the posterior part of the body. Similarly, certain imaging modalities (e.g. CT) do not reveal soft tissue characteristics that are required for certain diagnostic examinations, limiting the potential use of historical radiology data for the training and development of large-scale AI solutions.

Another challenge is the need for image-guidance for surgical procedures to minimize risk to patients, where certain volumetric acquisition techniques (e.g. MRI) are not yet always feasible in a surgical setting. Pre-operative plans obtained on these volumetric scans need to be aligned with intra-operative planar images, which may have different orientations, resolutions, and contrasts. For the reasons mentioned above, there is a growing need to align and bridge the gap between imaging modalities to enhance our understanding of a patient's context and also propagate manual labels across images and datasets.

The present disclosure provides a novel framework to bridge the gap between imaging modalities and enable the alignment between them. Embodiments also enable expert annotations to be propagated from one imaging modality to another. The concepts are exemplified below in terms of translating CT images to planar X-ray images, which are widely used in clinical practice. Embodiments may comprise three steps: 1) modality projection, 2) domain transfer, and 3) pathology manipulation.

The first step is to project 3D CT images and their annotations onto a plane through a physics-based simulator. The simulator mimics the physical process of X-ray acquisition by applying a ray-casting algorithm that computes the attenuation of X-rays along each ray from the X-ray source to the detector. The simulator may also allows control of one or more parameters such as source position, detector size, pixel spacing, and/or beam energy. The output of this step is a synthetic 2D X-ray image and its corresponding segmentation map that match the geometry and physics of the target modality.

The second step is to reduce the domain gap between synthetic images generated with the simulator and real medical scans. The synthetic images may have different styles and distributions than real images due to factors such as image noise, artifacts, contrast, and brightness. To address these challenges, the disclosed approach employs a domain transfer technique based on machine learning models such as Denoising Diffusion Probabilistic Models (DDPMs) in order to alter the style of synthetically generated images to match the distribution of real clinical images, without altering the semantics of the original data while preserving the alignment with any manual annotations. The output of this step is a realistic-looking 2D X-ray image, and in embodiment its corresponding segmentation map, that are indistinguishable from real data. Diffusion models have been used for domain transfer before, but not in a medical context, and nor in a pipeline that converts from source imaging modality to a simulation in a second modality and then to a realistic image in the second modality (e.g. CT->DRR->realistic image).

A third, optional step is to account for the possible population shift between imaging modality domains. For example, patients undergoing a CT scan may exhibit different pathologies than those who have an X-ray image taken. To address this issue, there is disclosed herein an image editing technique that can synthetically add and remove a set of abnormal findings while jointly altering the style of the image as described above. This technique allows the generating of diverse and balanced imaging datasets that cover various clinical scenarios and conditions. The output of this step is a 2D X-ray image, and in embodiments its corresponding segmentation map, that reflect the desired pathology state.

As an optional implementation the disclosed approach supports federated learning, which is a distributed learning paradigm that enables multiple parties to collaboratively train a model without sharing their data. This is particularly useful for medical image analysis, where data privacy and security are desirable. The source domain and target domain parts of the overall model may be trained independently; therefore, no data needs to be shared between the owners of the data in the source or target domain. For translation purposes only the latent representation of the source data computed by the source diffusion model need be shared with the owner of the target diffusion model that was trained using only data from the target distribution. This way, the disclosed approach can preserve data privacy while enabling cross-modal data augmentation and alignment.

Figure 1 shows an example computing system in accordance with embodiments of the present disclosure. The computing system comprises: one or more image sources 102a, 102b; and first computer equipment 104 implementing an image synthesis service 101. The one or more image sources 102a, 102b are operatively coupled to the computer equipment 104 of the image synthesis service 101, either directly or via one or more communication networks 150, such as the Internet, a mobile cellular network, and/or a private wired or wireless intranet of an organization (e.g. hospital, health organization or research institute). It will be appreciated that any data, signals or information described below as being exchanged between the image source(s) 102a, 102b and the first computer equipment 104, and between the computer equipment 104 and any other network elements, may be conducted by any such means of connection and/or others.

In an example implementation, the first computing equipment 104 is operated by a first party taking the role of an image synthesis service provider providing the image synthesis service 101; and the one or more image sources 102a, 102b may be comprised by one or more second computer systems 102a, 103b of one or more second parties other than the first party. E.g. each of the one or more image sources 102a, 102b may be comprised by respective second computer equipment 103a, 103b of a respective second party. The second parties act as image providers, to provide images from which the image synthesis service 101 can synthesize synthesized output images 235. By way of example, the image synthesis service provider may be a first institution such as a private or public research institution, or commercial machine-learning service provider; and each second party may comprise a respective second institution such as a hospital or other healthcare provider that supplies training data collected from its subjects (e.g. patients) for use by the image synthesis service 101. The second computer equipment 103a, 103b may be coupled to the first computer equipment 104 by one or more communication networks 150, such as any of the types mentioned above, e.g. the internet, and may be thereby arranged to provide images to the computer equipment 104 of the first computer system 101 via the one or more communication networks 150.

In an alternative implementation (not shown), one or more of the one or more image sources 102a, 102b may be part of the first computer equipment 104 and operated by the same party as in the image synthesis service 101. In other words, the image synthesis provider and at least one image provider may be one-and-the-same party (i.e. the image synthesis service 101 may produce its own source images). E.g. the image synthesis service 101 could be implemented internally within a hospital or research institute that has its own image acquisition device(s) 102 for capturing images from its own patients or subjects.

Either way, in embodiments each image source 102a, 102b may comprise at least one scanner for producing scans of at least a bodily part of a human or animal subject, living or dead, based on one or more scanning media types. For example such a scanner 102 may comprise an x-ray based scanner for producing x-ray scans, a PET scanner for producing PET scans, an MRI scanner for producing MRI scans, an ultrasound scanner for producing ultrasound scans, and/or scanning electron microscopy equipment for producing electron microscopy based scans. Another example could be visible light photography equipment for producing images of the subject in the form of photographs. Note also that for a given imaging medium type, there may be different possible technologies for producing an image. For example an x-ray based scan as referred to herein could refer to a 2D x-ray photograph or a more sophisticated form of scan based on x-rays as the probing medium, such as a CT (computed tomography) scan. Or a visible light based scan could refer to a simple macroscopic visible light photograph or an optical microscopy based scan. A given imaging technology (e.g. CT) employing a given imaging medium (e.g. x-ray radiation) may be referred to as an imaging modality.

Thus each image obtained by each image source 102a, 102b may take the form of a bodily scan or other such image of a human or animal body, obtained by an image source 102 in the form of a medical scanner or other such medical imaging equipment. Each such image is an empirical image, in that it has been captured from a real-life subject, being a real-life instance of the species of human or animal in question (as opposed to being an artificially synthesized image). Note also that a reference to an image of a subject does not necessarily limit to an image of the entire body of the subject. An image of only a particular body part or parts of a subject could also be described as an image of the subject.

In the case of bodily scans or the like, each image may comprise a 2D image or a 3D image. In the case of a 3D image, the image may comprise a stack of 2D slices through the subject, or a 3D model built up from a 3D scan or stack of 2D scans. In the case of a stack each slice comprises a cross-section through the subject taken at a different respective depth. For instance, while a simple x-ray photograph may comprise only a single x-ray image, a more sophisticated x-ray technology such as a CT (computed tomography) scan may comprise a stack of images representing slices through the subject at different depths, thus creating a stack of 2D slices representing a 3D volume of at least a portion of the subject's body. The scanning equipment 102 may be used to take a 2D or 3D scan of a given subject on a single occasion or multiple such scans taken on multiple different respective occasions (different times), e.g. spaced apart by hours, days, weeks, months or years.

The first computer equipment 104, implementing the image synthesis service 101, may comprise a single computer unit in a single housing, or multiple units in separate housings at one or more sites and networked together using any suitable communications network technology. For example the first computer equipment 104 may comprise one or more server units. E.g. the first computer equipment 104 may comprise multiple server units in the same rack, or different units or racks in the same room, different units or racks in different rooms of the same facility or data centre, and/or different facilities or data centres at different geographic sites. In the case of multiple computer units (e.g. server units), these may for example be networked together via a server area network, local area network, intranet, campus area network, metropolitan area network and/or a wide-area network or internetwork such as a mobile cellular network and/or the internet.

The first computer equipment 104 of the image synthesis service 101 may comprise one or more user interface devices for providing a user interface (UI). The one or more user interface devices may be integrated into one or more of the computer units of the first computer equipment 104, and/or may comprise one or more separate UI peripherals. The UI devices(s) may comprise one or more forms of information output means such as a display screen and/or audio output device; and/or one or more forms of user input means such as a touch screen, point-and click interface of the display, and/or a keyboard or voice interface. The first computer equipment 104 is thus able to provide a user interface (UI) for outputting information such as text or images to a user, and receiving text or other inputs from the user. The user of the first computer equipment 104 may be an operator of the image synthesis service 101. The user may comprise a single such person or a team of two or more people.

The first computer equipment 104 comprises processing apparatus 108 comprising one or more processors, and memory 110 comprising one or more memory units. The processor, or each processor, may take any suitable form such as a CPU (central processing unit), or a dedicated AI accelerator processor, or some other, re-purposed form of application-specific processor such as a GPU (graphics processing unit), crypto-processor or DSP (digital signal processor). The memory unit, or each memory unit, may take any suitable form, e.g. an electronic memory medium such as a SSD (solid state drive), flash memory, ROM (read only memory), EEPROM (electrically erasable and programable ROM), RAM (random access memory), SRAM (static RAM), and/or DRAM (dynamic RAM); and/or a magnetic memory such as a hard drive, removable magnetic disk, and/or magnetic tape drive; and/or optical memory such as CD (compact disc), DVD (digital versatile disk), quartz glass storage, and/or magneto-optical drive; and/or synthetic biological storage such as synthetic DNA storage.

In some examples, computer executable instructions are provided using any computer-readable medium or media that are accessible by the computing equipment 104. Computer-readable media include, for example, computer storage media such as memory 110 and communications media. Computer storage media include volatile and non-volatile, removable, and non-removable media implemented in any method or technology for storage of information such as computer readable instructions, data structures, program modules or the like. Computer storage media include, but are not limited to, Random Access Memory (RAM), Read-Only Memory (ROM), Erasable Programmable Read-Only Memory (EPROM), Electrically Erasable Programmable Read-Only Memory (EEPROM), persistent memory, phase change memory, flash memory or other memory technology, Compact Disk Read-Only Memory (CD-ROM), digital versatile disks (DVD) or other optical storage, magnetic cassettes, magnetic tape, magnetic disk storage, shingled disk storage or other magnetic storage devices, or any other non-transmission medium that can be used to store information for access by a computing apparatus. In contrast, communication media may embody computer readable instructions, data structures, program modules, or the like in a modulated data signal, such as a carrier wave, or other transport mechanism. As defined herein, computer storage media do not include communication media. Therefore, a computer storage medium should not be interpreted to be a propagating signal per se. Propagated signals per se are not examples of computer storage media. Although the computer storage medium (the memory 110) is shown within the computing equipment 104, it will be appreciated by a person skilled in the art, that, in some examples, the storage is distributed or located remotely and accessed via a communication network or other communication link (e.g., using a communication interface).

Whatever form it takes, the memory 110 is arranged to store a training database (DB) 112, a machine learning model 116, and a learning engine 118. The training database 112 stores, at least temporarily, the image data from one or more images received from the at least one image source 102a, 102b. The training database may optionally also store metadata describing one or more parameters of the subjects from which the images were captured, e.g. age, gender, location of birth or residence, a medical condition, or a segmentation of the image. Optionally the training database 112 may also store additional information accompanying one or more of the images from the image source(s) 102a, 102b, e.g. text data describing the image, such as a medical report.

The machine learning (ML) model 116 may comprise one or more neural networks, or any other form of statistical model capable of learning based on training data, such as a clustering model or decision forest. The machine learning (ML) engine 118 comprises software arranged to take one or more images from the training database 112, and optionally the associated metadata and/or accompanying data such as the textual reports, and input them to the ML model 116 to in order to train the ML model. Once trained, at least to some extent, the ML engine 118 may then input an image into the ML model 116, optionally along with additional data such as metadata and/or a textual report on the input image. The ML model 116 can thus be caused to make predictions (also called inferences) based on the input image and optional metadata and/or report data. In the present case the input image comprises a simulated image and the prediction comprises a synthesized output image 235 being a more realistic version of the input simulated image. The ML engine 118 comprises one or more machine learning algorithms arranged to train the ML model 116 based on past images and optionally associated metadata and/or reports from the training database 112. Alternatively the model may have been trained elsewhere, on other computer equipment (not shown), and copied to the memory 110.

In embodiments the system may further comprise a downstream client comprising third computer equipment 160. The third computer equipment 160 may comprise a single computer unit in a single housing, or multiple units in separate housings at one or more sites and networked together using any suitable communications network technology. Any of the implementation possibilities described earlier in relation to the first computer equipment 104 (e.g. as a server comprising one or more server units, etc.) are also possibilities for implementing the third computer equipment 160, and for brevity will not be repeated again here. The third computer equipment 160 comprises processing apparatus comprising one or more processors, and memory comprising one or more memory units. The processor, or each processor, may take any suitable form such as a CPU (central processing unit), etc. The memory unit, or each memory unit, may take any suitable form, e.g. an electronic memory medium such as an EEPROM, and/or a magnetic memory such as a hard drive, etc. Any of the possibilities described earlier for the types of processing apparatus 108 and memory 110 of the first computer equipment 104 are also possibilities for implementing the processing apparatus and memory of the third computing equipment 160, and for brevity those details are not repeated again here. The third computer equipment 160 may comprise one or more user interface devices such as a screen keyboard, mouse etc., either integrated in one or more of the computer unts of the third equipment or as peripherals. Any of the options described earlier for the UI device(s) of the first computer equipment 104 are also options for the UI of the third computer equipment 160.

The third computer equipment 160 is communicatively coupled to the first computer equipment 104 via one or more networks 150, such as the Internet, a mobile cellular network, and/or a private wired or wireless intranet of an organization (e.g. hospital, health organization or research institute). This/these communication network(s) may comprise one or more of the same networks as used to couple the second computer equipment 103 of the image provider(s) to the first computer equipment 104 of the image synthesis service 101, and/or one or more different communication networks. Either way, the third computer equipment 160 is thus able to receive one or more synthesized images 235 generated by the image synthesis service 101 (which in turn are based on the images provided by the image provider(s) from the second computer equipment 103). The downstream client 160 may be operated by a third party, other than the image synthesis service provider and other than the image provider.

The third computer equipment 160 comprises, stored in its memory, a downstream machine learning model 162, and a training algorithm 164. The training algorithm 164 is arranged to run on the processing apparatus of the third computer equipment 160, and is configured so as when thus run to train the downstream ML model 162 based on the one or more synthesized images 235 received from the image synthesis service 101. The downstream model 162 may comprise one or more neural networks, or any other form of statistical model capable of learning based on training data, such as a clustering model or decision forest.

In alternative implementations (not shown) the downstream model 162 and associated training algorithm may be incorporated in the first computer equipment 104, stored in its memory 110 and arranged to run on its processing apparatus 108. In this case the image synthesis and downstream model training are all implemented by the same party. Alternatively or additionally, the downstream client 160 may be operated by one of the image providers (in which case the third computer equipment of the downstream client 160 and the respective second computer equipment, e.g. 102a, of the image provider may be partially or wholly the same equipment).

Reference may be made herein to actions performed by the image synthesis service 101 or service provider, and by the image provider(s) and the downstream client. It will be understood that this may be considered short-hand for actions performed by those parties or services using the respective computer equipment of those parties or services; i.e. the first computer equipment 104, second computer equipment 103 and third computer equipment 160, respectively. Further, it will be understood that any communication between parties or services, or their corresponding computer equipment, may be performed via any one or more of the one or more communication networks 150. For brevity such implementation details will not necessarily be repeated each time.

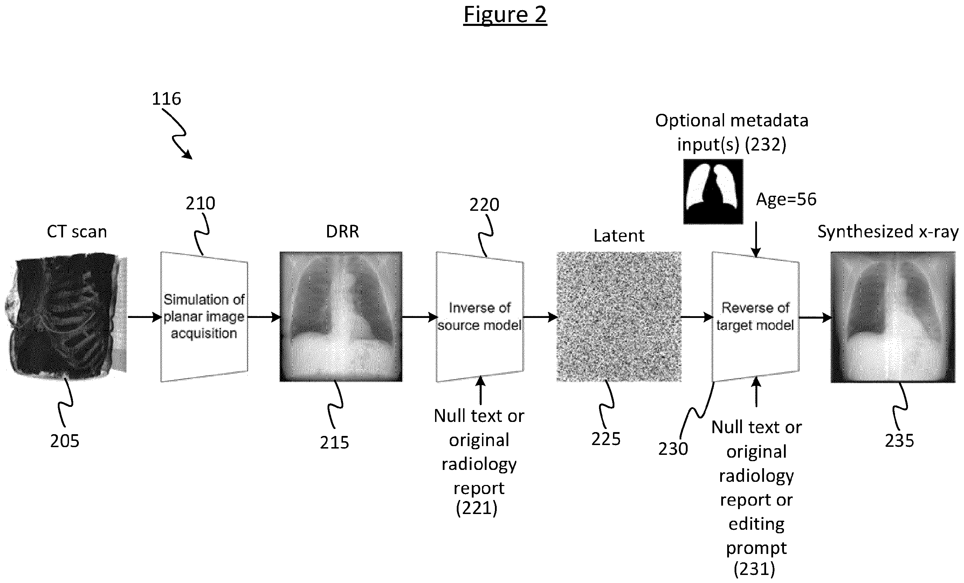

Figure 2 schematically illustrates further detail of the machine learning model 116 and its operation under control of the machine learning engine 118 in accordance with embodiments disclosed herein.

The overall machine learning (ML) model 118 comprises a plurality of constituent machine learning models: a first model 220 and a second model 230. Each of the first and second models 220, 230 may comprise a respective neural network. In embodiments, each comprises a diffusion model. For example each may comprise a Denoising Diffusion Probabilistic Model (DDPM). The first model 220 may also be described as the source model, or strictly the inverse of a source model since it is an inverse model. The second model 230 may be described as the target model, or strictly the inverse of a target model since it is also an inverse model. The wider ML model 118 further comprises a simulator 210. The simulator 210 is not in itself a machine learning model, but rather a predetermined, analytical mathematical model using predetermined analytical principles of a second imaging modality, e.g. predetermined geometric and/or physical principles, to simulate how an image would be captured in the second imaging modality. In embodiments the simulator 210 may be a DRR generator for generating DRRs (digitally reconstructed radiographs).

The simulator 210 is arranged to receive one or more source images 205 in a first imaging modality, e.g. CT scans, from one or more of the one or more image sources 102a, 102b of the one or more image providers 103a, 103b. These source images 205 may be actual, empirically captured images captured in the first modality. The simulator 210 is configured to generate at least one respective simulated input image 215 (e.g. a DRR) from each received source image 205. The respective simulated image simulates at least some of the content that was shown in the respective corresponding source image as if it had been captured in a second imaging modality (e.g. 2D x-ray photography) instead of the first imaging modality. The simulation is based on predetermined, analytical knowledge of one or more geometric properties and/or other physical properties of the mode of operation of the second imaging modality (as opposed to using statistical machine learning techniques to model the second modality).

In embodiments, the simulator 210 may also be configured to include segmentation information in one or more of the simulated images, to segment one or more features in each image such as to specify the boundary or region in which a tumour or organ appears in the simulated image 215.

The first (source) model 220 is arranged to receive each simulated source image 215 from the simulator 210, and based thereon to encode each into a respective latent representation 225. As will be familiar to a person skilled in the art, a latent representation is a representation that encodes the information in an input vector into an encoded latent vector, also sometimes called an embedding. The first (source) model 220 has been pre-trained based on past simulated images simulating the second imaging modality to be able to encode such images into a latent representation.

In embodiments the first model 220 may also be arranged to receive respective supporting information 221 associated with each of one or more of the one or more simulated images. For example the supporting information may comprise a textual report (authored by a human domain expert or another ML model) describing the corresponding respective source image 205, e.g. describing the estimated presence or absence of a condition (such as a particular disease) of subject shown in the image. In such embodiments the respective latent representation 225 for each simulated input image also encodes information from the associated supporting information, e.g. report.

The second (target) model 230 is arranged to receive the latent representation 225 of each input simulated image 215 from the first (source) model 220, and based thereon to generate a respective synthesized output image 235, e.g. a synthesized 2D x-ray image to continue the above example. The second (target) model 230 has been pre-trained based on actual, empirical images captured in the second imaging modality (e.g. 2D x-ray), and has thus learned to decode latent representations of image content into images in the second modality. Because the second model 230 has been trained based on actual images physically captured using the second modality, then advantageously the model can take into account one or more subtleties (e.g. typical patient posture) associated with the second imaging modality, adding them into the synthesized output images 235 when decoding the latent representations 225 despite those subtleties not having been captured in the respective simulated images 215 from which the latent representations were generated.

The synthesized output image(s) 235 may be supplied for input to the downstream model 162, e.g. on the downstream client 160, in order for the downstream model 162 to be trained by the training algorithm 164 based on the synthesized output images 235 as training data. The downstream model 162 can thus be trained to be able to make predictions for some downstream application, the predictions being based on further, empirical images that will be captured in the second imaging modality. E.g. the downstream model 162 may be trained to be able to identify a condition or anatomical feature of a subject (such as a human or animal patient) based on future 2D x-ray images of the subject, or to predict a treatment to apply to the subject based on such 2D x-ray images. As another example the downstream, model may be trained to segment such images, and/or generate or review textual reports on such images. The use of the disclosed upstream ML model 118 to generate synthesized x-ray images (or more generally images in the second imaging modality), for training the downstream model 162, advantageously enables images that were produced in the first modality (e.g. CT scans) to be used to generate training data for training the downstream model 118 to make predictions from images in a second imaging modality (e.g. 2D x-ray).

It is also not excluded that other uses for the synthesized images 235, other than training a downstream ML model 162 could be found. An example would be image retrieval. One may have a very large collection of real images and want to find similar images to the generated (synthesized) image 235. In general there could be at least two possible approaches for image retrieval. As a first approach, one could use metadata of one or more of the real images in the first modality to search for real images in the second modality with the same metadata. For example metadata of the original CT scan (e.g. age, sex etc.) could be used to look for real x-rays with the same metadata. In this case no images would be involved in the search process per se. On the other hand, a second approach involving the synthesized images 235 generated according to the present disclosure, would be not to use metadata (or at least not only metadata), but instead generate a synthesized image 235 in the second modality and use this to search for visually similar real images in the second modality (either by a manual comparison or an automated search based on automated image comparison). E.g. one could generate an x-ray using the disclosed approach (CT→DRR→x-ray), and then the generated x-ray can be used to look for visually similar x-rays. The first and second approaches could also be combined (i.e. search based on metadata and visual similarity).

For instance consider the following potential application: say there exists a CT scan of a patient but not a chest x-ray, and it is desired to find similar patients based on image features (as opposed to simply look for patients that have the same age, or sex, etc.). But there may only be available chest x-rays of all the other patients. In this case the disclosed method may be used to create synthesized chest x-rays 235 and then compare it to all the real images (based on metadata and/or visual similarity) and find the closest ones.

In embodiments, the second (target) model 230 may be further arranged to receive respective supporting information associated with each latent representation of one or more of the one or more simulated input images 215. For example the supporting information may comprise a textual report authored by a domain expert describing the corresponding respective source image 205, e.g. describing the estimated presence or absence of a condition (such as a particular disease) of subject shown in the image. This may be the same supporting information (e.g. report) that was input to the first (source) model 220 to generate the respective latent representation for the respective simulated input image 215, or it may be different information. In such embodiments the respective synthesized output image 235 is generated based on the respective latent representation 225 and the respective associated supporting information (e.g. report).

Thus in embodiment report information may be input again at the stage for the second/target model 230, even though it has already been input earlier into the first/source model 220 and encoded into the latent representation 225 which the second model 230 decodes. A motivation for doing this is that that redundancy can help. Intuitively, this may be thought of as telling the target model to pay more attention to certain details, e.g., the latent space in theory contains every information that was available in the DRR but there is also some noise. The report will only mention certain important things like specific diseases but not the location of e.g. every rib.

Alternatively or additionally, the second (target) model 230 may be further arranged to receive metadata 232 associated with the respective corresponding source image 205 or simulated image 215 from which the respective latent representation 225 of one or more of the one or more simulated images is encoded. For example, such metadata may comprise one or more parameters of a target (e.g. human or animal subject, such as a patient) shown in the respective source image 205 and corresponding simulated input image 215. E.g. this could comprise an age, gender, ethnicity, nationality, location of residence, and/or socioeconomic group of the subject; and/or information on a known or estimated presence or absence of a condition(e.g. disease) of the subject; and/or other information such as whether they are a smoker. As another alternative or additional example, the metadata may comprise segmentation information segmenting one or more features in the respective simulated input image 215. This may in turn have been generated by the simulator 210 based a segmentation of the respective source image 205. The segmentation may, for example, comprise a line drawn manually or automatically around a feature such as a tumour or organ in the image, or a highlighted region where the feature occurs, or any other means of demarcating the feature.

In such embodiments, the respective synthesized output image 235 is generated based on the respective latent representation 225 and the respective associated metadata 232 (e.g. age, segmentation, etc.). In the case of segmentation information, the respective synthesized output image 235 may comprise a corresponding synthesized segmentation generated by the second model 230 based on the respective segmentation metadata.

In embodiments, the segmentation may already be present in the simulated images 215 and encoded into the respective latent information 225 by the first/source model 220. Thus similarly to described above in relation to the textual report data 221, 231, in embodiments there may be some redundancy in that the segmentation data is encoded into the latent information which the second/target model 230 is decoding, and is also input separately as metadata 232. Again this may be thought of intuitively as telling the target model 230 to pay more attention to certain details. The inventors have found that segmentation masks/annotation maps are especially helpful here since they force the target model to generate structures, e.g. the heart, at the exact same location as in the DRR. Most of the time it works without the mask, and sometimes it is only a few pixels off, but at other times an important feature such as the heart moves around a bit therefore it is safer to use all additional information available: reports, masks, metadata like age, sex, etc.

As a yet further alternative or additional feature, the second (target) model 230 may be further arranged to receive an editing prompt 231 associated with the latent representation 225 being input for one or more of the one or more synthesized input images 215.

The editing prompt 231 is a control input. It may be a user input that is input by an operator through the UI of the image synthesis service 101, or alternatively it may be automatically generated. Either way, the editing prompt specifies one or more effects (e.g. abnormalities) to add or remove when generating a synthesized output image 235. Specifically, in accordance with embodiments disclosed herein, the editing prompt is used to add or remove one or more effects of a population difference between the first and second imaging modalities. In other words, the source images (captured in the first imaging modality) may have been sampled from a population (e.g. of human or animal subjects) that has a relative propensity, on average, toward or away from a certain property or feature, compared to a population from which the training images captured in the second modality were sampled (which were used to train the second model 230). E.g. CT scans may tend to be collected from different kinds of subjects with a tendency toward difference medical conditions or different demographics than 2D x-ray images. The editing prompt 231 advantageously allows an effect of such a "population shift" between modalities to be (at least partially) corrected for in the generation of the synthesized output images 235.

The editing prompt may be a scalar or a vector. It may specify one or more multiple effects (so in the latter case a given vector value of the editing prompt may specify a given combination of multiple effects to add or remove). A respective value of the editing prompt may be input for each synthesized output image 235 being generated, or alternatively a given value of the editing prompt may be applied across multiple synthesized output images.

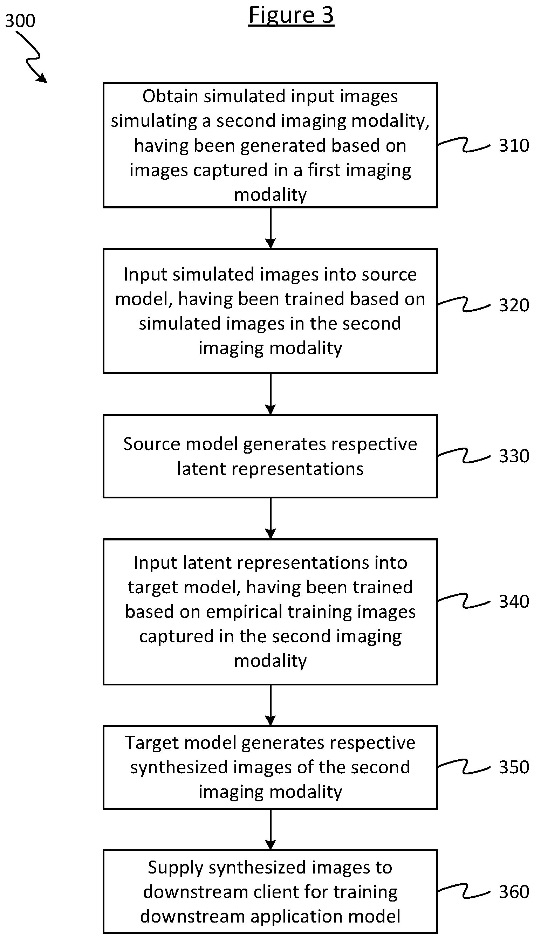

Figure 3 shows a flow chart of a method of using the model 118 as disclosed herein. The method may be performed by the image synthesis service 101.

At step 310, the method comprises obtaining one or more simulated input images 215, each simulated input image simulating an image of a target (e.g. human or animal subject) in a second imaging modality based on a respective image that was produced in a first imaging modality. This step may comprise receiving the one or more source images 205 in a first modality from one or more image providers 103a, 103b and generating the respective simulated input images 215 of the second modality at the image synthesis service 101. Alternatively one or more of the simulated input images 215 may be generated by the image provider(s) 103 or an intermediary party, in which case step 310 may comprise receiving the simulated images 215 from the image provider(s) or intermediary party. As another alternative, the method does not necessarily involve a separate image provider 103, and the source images may instead be produced directly by the image synthesis service 101. E.g. a healthcare organization or research institution with its own scanners 102 may provide the source image capture and image synthesis 101 all under one organization.

At step 320, the method comprises inputting the one or more simulated input images 215 into the first (source) model 220 (the first model 220 having been pre-trained prior to the method based on prior simulated images in the second imaging modality). In response to each simulated image, at step 230, the first model 220 generates a respective latent representation 225 based on the respective simulated input image 215.

At step 340 the method comprises inputting the latent representations 225 of the one or more simulated input images 215 into the second (target) model 230 (the second model 230 having been pre-trained prior to the method based on prior empirical images captured in the second imaging modality). In response to each latent representation 225, at step 350 the second model 230 generates the respective synthesized output image 235, being synthesized as if produced in the second imaging modality.

At step 360 the method may comprise supplying the one or more synthesized output images 235 to the downstream application model 162, causing the downstream model 162 to be trained by the training algorithm 164 using the synthesized output images 235 as training data (either as the sole training data for the downstream model, or to supplement other training data such as empirical training images captured in the second imaging modality). Step 360 may comprise sending the one or more synthesized output images 235 to the downstream client 160 via one or more of the one or more communication networks 150. Alternatively the downstream model 162 and training algorithm 164 could be incorporated within the same computing equipment 104 as part or all of the ML model 116 and engine 118 used for the synthesis. In this latter case the party operating the first computer equipment 104 is not providing a service for a downstream client but rather synthesizing the images for its own purpose. In some implementations the provision of the source images, the image synthesis 101, and the training of the downstream model 162 could all be implemented by the same party.

It will be appreciated that Figure 3 is somewhat schematized and in practice steps may be overlapped, e.g. pipelined. For example, it is not necessary to obtain all the simulated images at step 310 before proceeding to step 320 to encode at least one image, and it is not necessary to input or encode all the simulated images at step 320 or 330 before proceeding to step 340 or 350 to generate any synthesized output images. Similarly it is not necessary to wait to generate all synthesized output images 235 before starting to send one or more of them to the downstream model 162. In practice, for example, step 320 or 330 could be performed to encode an earlier-obtained simulated input image while step 310 is still being performed to obtain another, later simulated input image. And step 340 or 350 could be performed to generate a synthesized output image from the latent representation of an earlier-obtained simulated input image while step 320 or 330 is still being performed, or has yet to be performed, to encode another, later-obtained simulated input image. Similarly, step 360 could be performed to send a synthesized output image generated from the latent representation of an earlier-obtained simulated input image to the downstream model 164 while step 340 or 350 is still being performed, or has yet to be performed, to generate a synthesized output image from the latent representation of a later-obtained simulated input image.

There are at least two possible use cases for the disclosed techniques: 1) addressing the domain shift between different imaging modalities, and 2) addressing the domain shift between different imaging modalities combined with addressing the population shift between modalities. In both scenarios the disclosed modality-to-modality translation, a.k.a. image-to-image translation, pipeline provides a way of generating unbiased and realistic training data from semi-simulated source image data.

The domain shift describes the difference in visual appearance between two domains that is a result of differences in image acquisition. The differences are often reflected in different intensity distribution, contrast, brightness and noise levels as well as additional image markings (e.g., arrows, words, letters) and the presence of support devices, and other factors such as the subject's posture. E.g. see Figure 1A which shows a comparison of a simulated DRR and a corresponding real chest x-ray image. The upper panel I) shows the DRR and the lower panel II) shows the real chest x-ray.

In a worst-case scenario, a machine learning model trained only on DRR images will fail to meaningfully analyse real clinical acquired chest x-ray images. By translating DRR images into the domain of real chest x-rays on the other hand, the disclosed approach can provide new training data for machine learning models. Since the projected and translated training data will look more realistic, downstream models trained with such data will be less likely to fail to analyse real clinical chest x-rays.

With regard to population shift, a population may be defined by a variety of attributes such as: age, sex, race, consumption habits (e.g., smoking), and diseases. Even a small number of attributes (each with potentially many categories) can lead to a combinatorial explosion of such patient characteristics. For example, there could be only few cases of patients younger than 25 in a large dataset, who smoke and have lung cancer. As a result, there is a potential risk that a machine learning model exhibits worse performance on combinations of attributes that were underrepresented in the training data.

In the case of a segmentation model, certain diseases/pathologies (e.g., opacities) can occlude the borders of lung structures. For instance, a segmentation model that has seen only a small number of cases with rare findings during training potentially fails to accurately segment important anatomical structures in such a case. Embodiments of the disclosed approach can add these abnormal radiological findings to the generated images while also performing the translation across imaging modalities, including from the DRR domain to the domain of real chest x-rays. The disclosed approach is therefore able to provide training data for other machine learning models that contains a variety of pathologies. This will improve the robustness of machine learning models trained using the generated data.

To elaborate on embodiments of the methodology by way of example, the CT scan to chest x-ray pipeline shown in Figure 1 consists of three steps. First, a 2D Digitally Reconstructed Radiograph (DRR) 215 is simulated from 3D Computed Tomography (CT) data 205. Second, a latent representation 225 of a given DRR image is computed using the source diffusion model 220. Third, a realistic looking chest x-ray image 235 is generated using the latent representation 225 as the input for the target diffusion model 230. The output image 235 of the target diffusion model 230 will retain the shape and location of all the bones, organs and pathologies present in the DRR 215 while looking like a realistic chest x-ray. As a result, all labels and segmentations of the DRR images still apply to the translated image. The second and third step of the disclosed setup translates the simulated DRR to a realistic looking chest x-ray. In addition to the translation of the simulated DRR, in embodiments it is possible to control the visual appearance of output chest x-ray (e.g. adding or removing a pathology) by conditioning the target diffusion model 230 on text, masks, or meta variables 231/232.

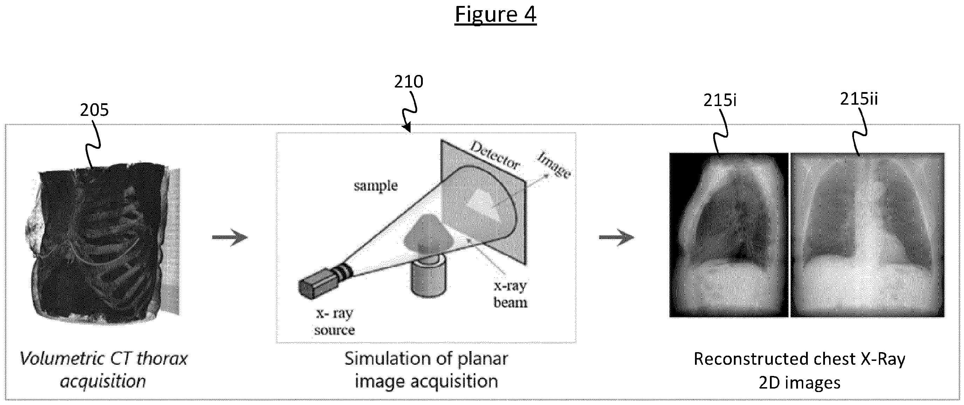

Regarding the projection between imaging modalities, a Digitally Reconstructed Radiograph (DRR) is a simulation of a conventional 2D x-ray image, created from computed tomography (CT) data. As seen in Figure 4, a digital simulator modelling x-ray imaging is used to project the 3D CT scan to a 2D DRR. A DRR, or conventional x-ray image, is a single 2D view of total x-ray absorption through the body along a given axis. Two objects (say, bones) in front of one another will overlap in the image. By contrast, a 3D CT image gives a volumetric representation.

The volumetric representation of CT enables clinicians to create detailed segmentation maps of structures that are potentially occluded in 2D x-ray images, e.g. demarcating regions in which anatomical features or medical conditions such as a tumour are seen. The simulation of DRRs from CT scans includes the projection of the 3D segmentation maps to 2D. For example a DRR may be overlaid with segmentations of different anatomical regions.

Figure 4 is a diagram showing the projection of a thorax CT image onto a planar surface using a digital simulator. A point x-ray source and ray-tracing is applied from different angles to reconstruct frontal and lateral synthetic chest x-rays, shown in the right of the diagram. Note also therefore that in embodiments, as shown by way of example in Figure 4, multiple simulated images 215 in the second imaging modality (e.g. 2D x-ray) may be generated from a given source image 205 in the first modality (e.g. a 3D CT scan). Those multiple images may show a target object in the source image (e.g. a human or animal subject) from different directions. Alternatively or additionally, the direction of the simulated 2D images could be randomized.

Following the projection between imaging modalities by means of the simulation, there follows the "simulated-to-real" translation. A goal of the image-to-image translation approach is to generate realistic looking x-ray images 235 that can be used for training machine learning models 162 on downstream tasks like classification and segmentation. Embodiments of the disclosed approach uses a dual diffusion model consisting of two diffusion models 220, 230 as seen in Figure 1.

The first diffusion model 220 may be called the source diffusion model, and it may be trained using only DRR images (or more generally simulated images). In embodiments, the training of the diffusion model may be performed according to the process. Denoising Diffusion Probabilistic Models (DDPMs) build up the data (e.g. images) step-by-step from pure noise in the so-called reverse process. For training purposes an auxiliary noising process, the forward process, is introduced that successively adds noise to data. The reverse process is then optimized to resemble the forward process. The denoising model has a UNet architecture whose parameters are updated via:

$$\theta^* = \arg\min_{\theta} \mathbb{E}_{\mathbf{z}_t, t, \epsilon} \left[ \left\| \epsilon_\theta(\mathbf{z}_t, \mathbf{c}, t) - \epsilon \right\|_2^2 \right], \qquad (1)$$

where $\mathbf{z}_t = \sqrt{\overline{\alpha_t}} \mathbf{z}_0 + \sqrt{1 - \overline{\alpha_t}} \epsilon$, with $z_0 = E_\psi(x)$, $t \sim \mathcal{U}(0, T)$ and $\varepsilon \sim \mathcal{N}(0, 1)$ is the noise.

After training one can sample Gaussian noise from N(0,I) and generate images via the reverse process.

The source diffusion model 220 is used to compute a latent representation 225 of the input DRR image 215. To compute a latent representation, an inversion of the diffusion process is performed. That is, instead of starting the reverse diffusion process (noise to image) from noise samples from a normal Gaussian distribution N(0, I), one can instead start from a latent representation of an existing image. To compute a latent representation of an image, a Denoising Diffusion Implicit Models (DDIM) may be used. DDIMs follow a specific parameterization that allows us to invert the diffusion process. DDIMs provide a deterministic counterpart to DDPMs. The deterministic formulation allows us to use the trained denoising model but run it from 0 to T. DDIM inversion results in a list of noisy latent samples [z^_0, ..., z^_T]. DDIM inversion has been successful in image editing because this noisy latent space can be used as a starting point for the generation (reverse diffusion) process. It has been shown that creating a noisy latent space from the original image using DDIM inversion encourages the edited image to retain structural similarity with the original image.

The inversion can be conditioned on either the original report of the original image or an empty prompt. To add or remove a pathology during the reverse diffusion process (i.e., from noise to image), a prompt may be used such as 'Left large pleural effusion' or 'No opacities'.

The second diffusion model 230 may be called the target diffusion model, and it may be trained using only real chest x-rays (or more generally empirical images), such as the publicly available MIMIC-CXR dataset. The training procedure of the target diffusion model 230 may be identical to the training of the source diffusion model, as described above. The target diffusion model is used to generate a realistic looking chest x-ray image 235 from the latent representations 225 of the DRR computed by the source diffusion model 220. The target diffusion model is running the reverse diffusion process starting from these latent representations.

To control the image generation, the denoising process may be conditioned on text embedding, where a pretrained text encoder is used to turn radiology reports into text embeddings. At each step of the reverse diffusion process, the text embedding is used to condition the denoising Unet. Classifier-free guidance may be used to control the strength of the conditioning.

When translating a 2D image from the DRR domain to the domain of realistic x-rays, embodiments may use the corresponding segmentation maps to guide the image generation process. Embodiments use the segmentation maps to ensure that after translation the structures inside of these annotations have been unchanged in terms of shape, size, and location. This may be done by performing two operations for each step of the image generation. First, the noisy image from the previous step is denoised. Second, a copy is taken of the latent representation (computed by the source model) corresponding to the current time step inside of the mask. Outside of the mask, the denoised image of the current time step is retained. This approach allows the diffusion model to translate the appearance of the image to the target domain while preserving the structure inside of the annotation maps.

An example of image-to-image translation with 2D segmentations is as follows. Consider the case where in addition to the DDR image a 2D segmentation is provided. The 2D segmentation is a projection of the 3D segmentation like how the DDR image is a projection of a 3D CT scan. To ensure that the 2D segmentation is still valid after the translation from DRR to realistic chest x-ray image, embodiments of the disclosed approach may perform the following steps.

1. Compute the latent representations $[z\_0, ..., z\_T]$ of a DRR using DDIM inversion conditioned on the original prompt or an empty prompt
2. Set $x\_T = z\_T$
3. For t in range(T, 0):

    a. Predict residual noise from $x\_t$
    b. Compute $x\_(t-1)$
    c. Combine latent and noisy image using the segmentation mask M: $M * z\_(t-1) + (1 - M) * x\_(t-1)$.

Intuitively the disclosed approach works similarly to an outpainting approach where the inside of the lungs are fixed and the outside of the lungs are generated from noise. Using the dual diffusion approach described earlier, it may be ensured that:

    i. the location and size of the organs and pathologies of the original image are captured by the latent space via inverting the source diffusion model, and
    ii. The appearance of the generated/translated image matches that of a realistic CXR since we are using the target diffusion model trained on real CXRs.

Turning to another optional feature, as mentioned above in relation to Figure 4, in some embodiments a given source image 205 in the first modality (e.g. a 3D image such as a CT scan) is used to simulate multiple simulated images 215 in the second modality (e.g. multiple 2D images such as multiple 2D x-rays). In such embodiments, for a given source image (e.g. CT scan), the simulator 210 simulates multiple different simulated images in the second modality showing the target object (e.g. human or animal subject) from different angles. The first (source) model 220 encodes each of these into a separate respective latent representation 225 for each of the multiple simulated images representing the different angles. Based on this, the second (target) model 230 generate multiple respective synthesized output images 235 for the different angles, i.e. a respective synthesize image for each angle based on the respective latent representation.

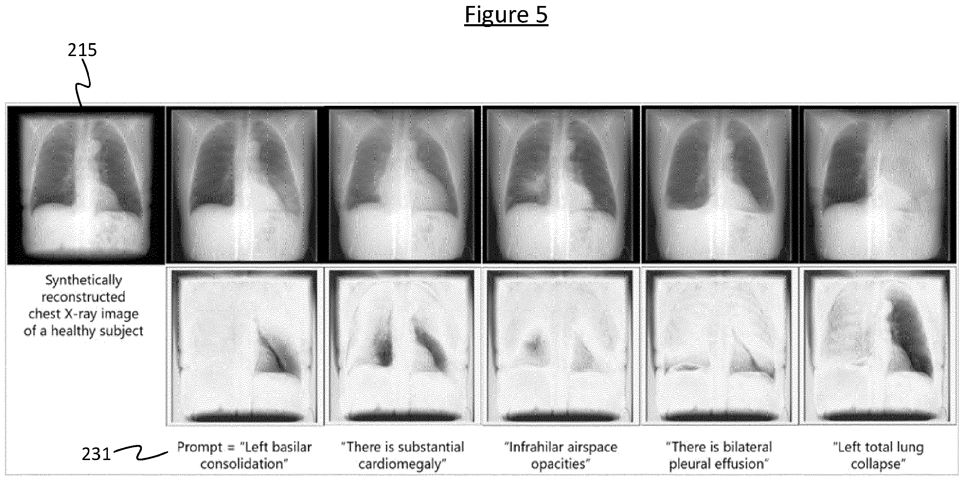

As another optional feature, as also mentioned earlier, embodiments disclosed herein may also employ image editing to address population shifts between imaging modalities. During the reverse diffusion process, it is possible to use a variety of conditioning signals to guide the diffusion process. If it is desired to only translate the input DRR to a realistic looking chest x-ray image, the target diffusion model can be used without any additional input conditioning signals such as user text prompt, i.e. only the latent representations of the DRRs is used. However, if it is desired to add or remove a pathology, one can use an editing text prompt such as "Left basilar consolidation" as a conditioning signal during the reverse diffusion process run by the target diffusion model. See Figure 5 for an example set of image editing examples verified by an expert radiologist. Figure 5 shows examples of how synthetically reconstructed images (top left) can be altered with the guidance of projected segmentations and user input prompts to create data diversity beneficial for AI model training and stress-testing purposes. The images shown at the bottom correspond to difference maps between the input and its edited version on top.

In order perform text-based edits, the target diffusion model is trained with radiology reports in addition to the real chest x-ray images, e.g. as discussed earlier. A mask can be used (in addition to the editing prompt) to further guide the addition or removal of a pathology. Lastly, if the target diffusion model is trained on patient meta-variables, such as age, sex, and image acquisition view, during the reverse diffusion process, it is possible to control these meta variables of the output image to create a diverse set of images. In embodiment the disclosed approach may thus alleviate two problems that can arise when training classification or segmentation models directly with synthetic DRR images: i) domain shift and ii) population shift. In both cases classification or segmentation models may be used for a downstream task such as the analysis of real chest x-ray images.

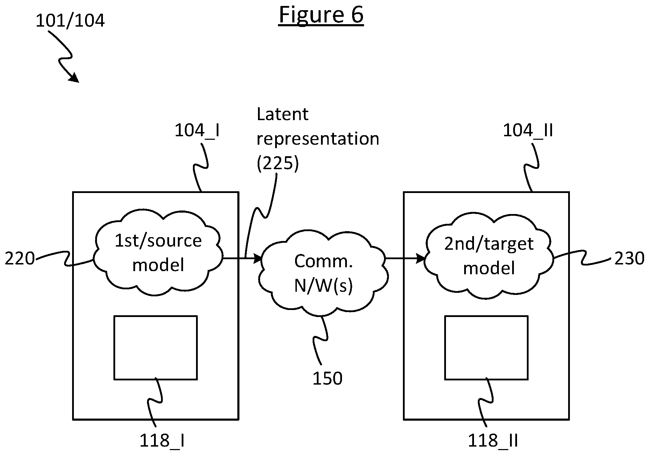

The presently disclosed approach also supports federated learning as one possible implementation. This is illustrated in Figure 6. Here the first computer equipment 104, implementing the image synthesis service 101, is divided between encode-side computer equipment 104_I of an encode-side party, and decode-side computer equipment 104_II of a decode-side party being a different party than the encode-side party, and who may be independent of the encode-side party. The machine learning engine 118 is divided between: I) an encode-side engine 118_I stored in memory of the encode-side computer equipment 104_I and arranged to run on processing apparatus of the encode-side computer equipment 104_I, and II) a decode-side engine 118_II stored in memory of the decode-side computer equipment 104_II and arranged to run on processing apparatus of the decode-side computer equipment 104_II. The first (source) model 220 is stored in the memory of the encode-side computer equipment 104_I, and the second (target) model 230 is stored in the memory of the decode-side computer equipment 104_II. The encode-side engine 118_I, when run, performs the steps associated with the first (source) model 220; and the decode side engine 118_II, when run, performs the steps associated with the second (target) model 230. The encode-side computer equipment 104_I transmits each latent representation 225 output by the first model 220 to the decode-side computer equipment 104_II, over one or more of the one or more communication networks 150. This could comprise the same communication network as used for other purposes, such as to receive the source images 205 or simulated images 215, or a different network. Either way the decode-side computer equipment 104_I thus receives each latent representation 225 and, under control of the decode-side engine 118_II, inputs each into the second model 230 in order to generate the respective synthesized output image 235 from each latent representation.

Thus the first and second (source and target) models 220, 230 can be trained and run in a fully federated manner. The source model 220 (e.g. a diffusion model) can be trained independently of the target model 230 (e.g. another diffusion model) using only source domain data (DRR images). Vice versa, the target diffusion model can be trained independently of the source diffusion model on the target domain data (real chest x-ray images). Furthermore, for the translation/domain transfer the owner of the source diffusion model need only send the latent representation to the owner of the target diffusion model. The target diffusion model owner can use the latent representation to create an image in the target domain.

In further extensions of the above-disclosed techniques, while the above has been exemplified in terms of the first imaging modality being CT and the second imaging modality being 2D-xray, this is not limiting and the same concepts may be extended to other pairs of imaging modalities. For example, the first imaging modality may be a non x-ray based modality such as MRI, PET or ultrasound, and the second imaging modality may be an x-ray based modality such as CT or 2D-ray photography. Or the first modality could be an x-ray based modality such as CT or 2D x-ray photography; while the second modality may be a non x-ray based modality such as MRI, PET or ultrasound. Or both the first and second modality may be non x-ray based, e.g. the first being MRI and the second being PET or vice versa, or the first being MRI and the second being ultrasound or vice versa, or the first being PET and the second being ultrasound or vice versa. In general any pairing of imaging modalities is possible. Assuming the skilled person understands the physics and/or geometry behind the first and second imaging modalities (e.g. the person skilled in medical imaging knows how MRI, PET and ultrasound imaging work), then the skilled person will be able to provide a suitable simulator 210 simulating at least some aspects of the physical image acquisition means of the second modality based on source image captured in the first modality. The second (target) model 230, based on its training with real images captured in the second modality, can then compensate for any additional factors that are not captured by the simulator.

Further, the applicability of the disclosed techniques is not limited to medical applications. More generally the synthesized output images could be used to train any downstream model 162 for any downstream tasks that takes images in the second modality as at least one input, e.g. for image recognition or autonomous control applications.

One such example would be training self-driving cars (e.g. for detection of lane markings and other cars) using image data from other sources, such as video game data. In this case the source data is the 3D environment of the video game. Compared to real world video recordings, one can obtain labels and annotation masks/segmentations for things like cars, lane markings and pedestrians for free. In addition, it is simple to simulate highly specific scenarios, e.g., a crowded street at night where all cars are red and all pedestrians are wearing a green outfit. The simulation step (analogue to CT -> DRR) is rendering from 3D into 2D. It is known to generate a 2D dataset using 3D video game data. In the past the 2D dataset was to train a model directly, but in the present case the 2D dataset of video game images would be translated to realistic looking images.

Another example application lies in robotics. E.g. robotic arms are often trained in simulations since it can be too dangerous and time consuming to do it in the real world (the same is true for self-driving cars). It is known to provide a simulated environment for training, and then the robot may be further tested in a real-life test environment. The simulated environment has a lot of advantages, like being able to easily change the color of the table and the objects on the table. This type of data is often used to teach the robot about objects. Later it should be able to understand instructions like: "pick up the green sphere". The presently disclosed approach could be applied in such a scenario as follows: start with a 3D scene of the table and objects, then create a 2D render, and then translate the rendered 2D images to the test domain.

Further, the synthesized images 235 do not necessarily have to be used only for training another, downstream model 162 as shown in Figure 1. Alternatively or additionally, the synthesized image(s) 235 could be used for one or more other applications, such as teaching, presentation, or as a reference for image retrieval as discussed earlier.

It will be appreciated that the above embodiments have been disclosed by way of example only. Other variants or use cases may become apparent to a person skilled in the art once given the disclosure herein. The scope of the present disclosure is not limited by the above-described embodiments, but only by the accompanying claims.

**Claims**

1. A computer implemented method comprising:

    obtaining a simulated input image simulating a second imaging modality based on a source image in a first imaging modality;
    inputting the simulated input image into a first machine learning model trained based on simulated training images in the second imaging modality, thereby generating a latent representation of the simulated input image; and
    causing the latent representation to be input into a second machine learning model trained based on empirical training images in the second image modality, thereby resulting in the second machine learning model generating a synthesized output image in the second modality.

2. The method of claim 1, further comprising causing an editing prompt to be input into the second machine learning model, the editing prompt resulting in the second machine learning model, when generating the synthesized output image, to add or remove an effect of a population difference between the first imaging modality and the second imaging modality.

3. The method of claim 1 or 2, wherein the output images are used to train a downstream model to make a prediction, the prediction being based on a further image in the second imaging modality.

4. The method of claim 3, wherein the prediction comprises at least one of: diagnosing a medical condition of a subject shown in the further image, or segmenting an anatomical feature of the subject or condition shown in the further image, or predicting a medical treatment to apply to the subject.

5. The method of any preceding claim, wherein the first imaging modality is 3D and the second is imaging modality is 2D.

6. The method of any preceding claim, wherein first imaging modality is CT, computed tomography, and the second imaging modality is 2D x-ray.

7. The method of claim 6, wherein the simulation is by DRR, digitally reconstructed radiograph.

8. The method of any preceding claim, wherein one or each of the first and/or second models is a diffusion model.

9. The method of any preceding claim, wherein the method is performed by computer equipment of an image synthesis service provider, and said causing comprises sending the latent representation to another party other than the image synthesis service provider, without sharing the source images nor simulated input image with the other party, thereby resulting in said other party performing the generating of the output images on computer equipment of the other party.

10. The method of any preceding claim, wherein the method is performed by computer equipment of an image synthesis service provider, and wherein either:

    - said obtaining comprises receiving source image from a source image provider being a party other than the image synthesis service provider, and generating the simulated image at the computer equipment of the image synthesize service provider; or

- the obtaining comprises receiving the simulated input image from the source image provider or an intermediate party other than the image synthesis service provider, having been generated based on the source image at computer equipment of the source image provider or intermediate party.

11. The method of any preceding claim, wherein the generating of the simulated input image comprises one or both of:

- randomizing a direction of the simulated input image; and/or
- generating multiple simulated input images from different directions, wherein said inputting comprises inputting the plurality of simulated input images into the first machine learning, thereby generating a respective instance of the latent representation based on each of the plurality of simulated input images, wherein the second model generates a respective synthesized output image from each respective instance of the latent representation.

12. The method of any preceding claim, further comprising obtaining metadata associated the simulated input image, based on the respective source image, wherein the generating of the respective output image is further based on the metadata.

13. The method of any preceding claim, wherein one or both of:

- the first model is also trained based on supporting data of a first type comprising a textual report, segmentation or other metadata describing the training images of the first modality, and the inputting of the simulated input images further comprises inputting corresponding supporting data of said first type; and/or

the target model is also trained based on other supporting data of a second type comprising a textual report, segmentation or other metadata describing the training images of the second modality, and the inputting of the latent representations further comprises inputting corresponding supporting data of said second type.

14. A computer program embodied on computer-readable storage, the computer program comprising code configured so as when run on one or more processors to perform the method of any preceding claim.

15. A computer system comprising:

processing apparatus comprising one or more processors; and
memory comprising one or more memory devices, wherein the memory stores code arranged to run on the processing apparatus;
wherein the code is configured so as when run on the processing apparatus to perform a method comprising:

obtaining a latent representation encoding a simulated input image simulating a second imaging modality simulated based on a source image in a first imaging modality;
inputting the latent information into a machine learning model trained based on empirical training images in the second image modality, and further inputting an editing prompt into the second machine learning model; and
operating the second machine learning model to generate a synthesized output image in the second modality based on the latent representation and the input editing prompt, wherein the editing prompt causes the second machine learning model, when generating the synthesized output image, to add or remove an effect of a population difference between the first imaging modality and the second imaging modality.

## Figure 1

Synthesized images (235)

116 — ML Model

112 — Training data DB

118 — Learning engine

Synth. service 101

108

110

104

150

Communication network(s)

150

Communication network(s)

Down-stream client 160

Image provider 1

Image provider 2

102a

102b

103a

103b

Downstream model — 162

Training alg. — 164

## Figure 1A

I) Simulated

II) Real

Figure 2

116

CT scan — 205

210 — Simulation of planar image acquisition

DRR — 215

220 — Inverse of source model

Null text or original radiology report (221)

Latent — 225

230 — Reverse of target model

Null text or original radiology report or editing prompt (231)

Optional metadata input(s) (232)

Age=56

Synthesized x-ray — 235

## Figure 3

300

Obtain simulated input images simulating a second imaging modality, having been generated based on images captured in a first imaging modality — 310

Input simulated images into source model, having been trained based on simulated images in the second imaging modality — 320

Source model generates respective latent representations — 330

Input latent representations into target model, having been trained based on empirical training images captured in the second imaging modality — 340

Target model generates respective synthesized images of the second imaging modality — 350

Supply synthesized images to downstream client for training downstream application model — 360

Figure 4

205

210

215i    215ii

*Volumetric CT thorax acquisition*

Simulation of planar image acquisition

Reconstructed chest X-Ray 2D images

EP 4 575 998 A1

Figure 5

"Left total lung collapse"

"There is bilateral pleural effusion"

"Infrahilar airspace opacities"

"There is substantial cardiomegaly"

Prompt = "Left basilar consolidation"

Synthetically reconstructed chest X-ray image of a healthy subject

215

231

<u>Figure 6</u>

101/104

104_I
Latent
representation
(225)
104_II

220
1st/source
model

Comm.
N/W(s)

2nd/target
model
230

118_I
150
118_II

**EP 4 575 998 A1**

Europäisches Patentamt

European Patent Office

Office européen des brevets

# EUROPEAN SEARCH REPORT

**Application Number**

EP 23 21 7993

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUE ZHANG ET AL: "Task Driven Generative Modeling for Unsupervised Domain Adaptation: Application to X-ray Image Segmentation", ARXIV.ORG, CORNELL UNIVERSITY LIBRARY, 201 OLIN LIBRARY CORNELL UNIVERSITY ITHACA, NY 14853, 12 June 2018 (2018-06-12), XP081763687, DOI: 10.1007/978-3-030-00934-2_67 | 1,3-14 | INV. G06T11/00 |
| A | * abstract * <br> * figures 1-3 * <br> * sections 2.1, 2.2 * <br> * page 6, paragraph 1 * <br> * page 7, paragraph 2 * <br> * page 2, paragraph 2 * <br> ----- | 2,15 | |
| A | ZHAN FANGNENG ET AL: "Multimodal Image Synthesis and Editing: The Generative AI Era", IEEE TRANSACTIONS ON PATTERN ANALYSIS AND MACHINE INTELLIGENCE, IEEE COMPUTER SOCIETY, USA, vol. 45, no. 12, 24 August 2023 (2023-08-24), pages 15098-15119, XP011952696, ISSN: 0162-8828, DOI: 10.1109/TPAMI.2023.3305243 [retrieved on 2023-08-25] * abstract * * section II.A, III.B * ----- | 1-15 | |

**TECHNICAL FIELDS SEARCHED (IPC)**

G06T

The present search report has been drawn up for all claims

| Place of search | Date of completion of the search | Examiner |
|---|---|---|
| Munich | 5 April 2024 | Scholz, Volker |

EPO FORM 1503 03.82 (P04C01)

24